# EUROPÄISCHE PATENTANMELDUNG

(11) **EP 1 538 582 A2**
(43) Veröffentlichungstag der Anmeldung: **08.06.2005**
(21) Anmeldenummer: 05003051.9
(22) Anmeldetag: 22.02.2000
(51) Int. Cl.: G08G 1/0968, G01C 21/26, G08G 1/09, G08G 1/0962

(54) **Vorrichtung zum Ausgeben von Verkehrsinformation in einem Kraftfahrzeug**

(30) Priorität: 01.03.1999 DE 19908869
(62) Teilanmeldung aus: 00103736.5
(71) Anmelder: Nokia Corporation, 02150 Espoo (FI)
(72) Erfinder: Hanebrink, Thomas, 44879 Bochum (DE)
(74) Vertreter: TER MEER STEINMEISTER & PARTNER GbR

(57) **Zusammenfassung**

Die Erfindung betrifft Vorrichtung zum Ausgeben von Verkehrsinformation in einem Kraftfahrzeug, mit einer Speichereinheit (16) zum Speichern von zum Kraftfahrzeug übertragenen Verkehrsmeldungen zusammen mit der jeweiligen Position des Streckenabschnitts oder -punkts, auf den sie sich beziehen, einer zentralen Rechen- und Steuereinheit (10), die die Positionen der Verkehrsmeldungen mit der jeweiligen Position des Kraftfahrzeugs vergleicht, in dem die Verkehrsinformation ausgegeben werden soll, um die Abstände der jeweiligen Positionen der Verkehrsmeldungen von der Position dieses Kraftfahrzeugs festzustellen, und einer Anzeige- und/oder Sprachausgabeeinheit (14 bzw. 15) zum Ausgeben der Verkehrsmeldungen. Um dem Fahrer die Verkehrsinformation so präsentieren zu können, daß er sein Fahrverhalten und/oder seine Fahrtroutenwahl rechtzeitig an die jeweils aktuelle Verkehrssituation anpassen kann, ist vorgesehen dass die zentrale Rechen- und Steuereinheit (10) Mittel zum Sortieren der Verkehrsmeldungen nach Abständen umfaßt, um die Verkehrsmeldungen sortiert, beginnend mit dem kleinsten Abstand ausgeben zu können.

## Beschreibung

Die Erfindung betrifft eine Vorrichtung zum Ausgeben von Verkehrsinformation in einem Kraftfahrzeug.

Es ist bereits seit langem bekannt, Verkehrsmeldungen über Rundfunksender auszugeben, so daß die Fahrer von Kraftfahrzeugen über einen im Fahrzeug befindlichen Rundfunkempfänger diese Verkehrsmeldungen abhören können. Die einzelnen Rundfunksender liefern dabei im wesentlichen nur Verkehrsmeldungen, die das jeweilige Sendegebiet betreffen. Darüber hinaus werden die Verkehrsmeldungen üblicherweise so sortiert, daß sie nach der Wichtigkeit jeweils betroffener Straßen ausgegeben werden. Üblicherweise werden also Verkehrsmeldungen für Autobahnen vor denen von Landstraßen und Städten gesendet.

Liegen wie in Ballungsgebieten sehr viele Meldungen vor, so muß der Fahrer eines Fahrzeugs beim Empfang der Verkehrsmeldungen diese aufmerksam verfolgen, um festzustellen, ob für ihn relevante Verkehrsmeldungen vorliegen. Dies kann äußerst störend sein und den Fahrer vom aktuellen Verkehrsgeschehen ablenken. Andererseits kommt es dabei häufig vor, daß der Fahrer zwar die einzelnen Verkehrsmeldungen aufmerksam verfolgt, im entscheidenden Augenblick jedoch durch das aktuelle Verkehrsgeschehen, das aus Sicherheitsgründen die Aufmerksamkeit des Fahrers vorrangig beansprucht, abgelenkt wird, so daß er gerade die ihn interessierende Verkehrsmeldung überhört.

Neben diesem öffentliche und private Rundfunksender nutzenden Verkehrsinformationssystem sind bereits weitere Verkehrsinformationssysteme bekannt, die es einem Benutzer, also z. B. einem Fahrer eines Kraftfahrzeugs ermöglichen, Verkehrsinformation individuell anzufordern.

Bei einem derartigen bekannten Verkehrsinformationssystem kann der Fahrer eines Kraftfahrzeugs vor Beginn einer Fahrt einem im Kraftfahrzeug installierten Endgerät mitteilen, für welchen geographischen Bereich er Verkehrsinformation wünscht. Hierzu muß entsprechende Information in das Endgerät eingegeben werden, etwa dahingehend, daß sich der Fahrer zukünftig nur innerhalb einer Stadt zu bewegen wünscht oder beabsichtigt, zum Beispiel auf einer Überlandstrecke oder Autobahn ein entfernteres Ziel anzusteuern. Im zuerst genannten Fall wird ihm dann nur Verkehrsinformation angezeigt bzw. mitgeteilt, die für einen kreisförmigen Bereich mit einem vorbestimmten Radius um das Kraftfahrzeug herum relevant ist. Dabei kann der Fahrer auch die Größe des Radius selbst festlegen. Demgegenüber wird im zuletzt genannten Fall dem Fahrer nur Verkehrsinformation übermittelt, die für einen vorbestimmten Bereich um das Kraftfahrzeug herum und für denjenigen Bereich gilt, in welchem sich das Kraftfahrzeug in Richtung auf das Ziel bewegt. Im zweiten Fall ist der Bereich, für den relevante Verkehrsinformation erhalten wird, quasi schlüssellochförmig ausgebildet. Auch hier können Radien und Entfernungen vom Fahrer vor Antritt der Fahrt frei gewählt oder vom System vorgegeben werden.

Obwohl bei diesem Verkehrsinformationssystem durch die individuelle geographische Begrenzung des Gebiets, für das Verkehrsmeldungen ausgegeben werden, die Anzahl der Verkehrsmeldungen reduziert ist, muß der an Verkehrsinformation interessierte Benutzer sämtliche Verkehrsmeldungen abhören, um festzustellen, ob für ihn relevante Verkehrsmeldungen dabei sind.

Davon ausgehend liegt der Erfindung die Aufgabe zugrunde, eine Vorrichtung zum Ausgeben von Verkehrsinformation in einem Kraftfahrzeug bereitzustellen, die es ermöglicht, die Verkehrsmeldungen individuell so auszugeben, daß der interessierte Benutzer möglichst schnell über die für ihn wichtige Verkehrssituation informiert wird.

Diese Aufgabe wird durch das Vorrichtung nach Anspruch 1 gelöst. Vorteilhafte Ausgestaltungen der Erfindung sind in den Unteransprüchen beschrieben.

Erfindungsgemäß werden also Verkehrinformationen zusammen mit der jeweiligen Position des Streckenabschnitts oder -punkts gespeichert, auf den sie sich beziehen. Vor der Ausgabe der Verkehrsinformation werden dann die Positionen der Verkehrsmeldungen mit der jeweiligen Position des Kraftfahrzeugs verglichen, in dem die Verkehrsmeldungen ausgegeben werden soll, um die Abstände der jeweiligen Positionen der Verkehrsmeldungen von der Postition dieses Kraftfahrzeugs festzustellen. Daraufhin werden die Verkehrsmeldungen nach Abständen sortiert und beginnend mit dem kleinsten Abstand ausgegeben. Die erste Verkehrsmeldung, die dem Fahrer mit Hilfe der Erfindung angesagt oder angezeigt wird, ist also die Verkehrsmeldung, die der aktuellen Kraftfahrzeugposition am nächsten liegt. Der Fahrer kann somit je nach Art der Verkehrsmeldung sofort entscheiden in wieweit die angesagte Verkehrssituation oder der angesagte Streckenzustand seine Routenplanung unmittelbar beeinflußt, so daß er gegebenenfalls noch rechtzeitig eine Umgehungsstrecke anstelle der geplanten Route wählen kann.

Nach einem ersten Ausführungsbeispiel der Erfindung ist vorgesehen, daß die sortierten Verkehrsmeldungen zu einem Kraftfahrzeug übertragen werden. Hier werden also die Verkehrsmeldungen bereits beim Diensteanbieter, also beim Betreiber des Verkehrsinformationssystems sortiert, so daß das Endgerät im Kraftfahrzeug für die Ausgabe der Verkehrsinformation äußerst einfach gestaltet werden kann.

Bei einer anderen vorteilhaften Weiterbildung der Erfindung ist allerdings vorgesehen, daß die Verkehrsmeldungen zu einem Kraftfahrzeug übertragen, dort sortiert und gespeichert werden, wobei die zu einem Kraftfahrzeug übertragenen Verkehrsmeldungen in vorgebbaren Zeitabständen laufend aktualisiert werden.

Auf diese Weise wird es ermöglicht, daß sich der Fahrer eines Kraftfahrzeugs jederzeit aktuelle Verkehrsinformationen ansagen oder anzeigen lassen kann, wobei diese Verkehrsinformationen in Abhängigkeit vom aktuellen Standort ausgegeben werden.

Bei einer vorteilhaften Weiterbildung der Erfindung ist vorgesehen, daß im Kraftfahrzeug nur Verkehrsmeldungen gespeichert und anschließend ausgegeben werden, die ein ausgewähltes Gebiet betreffen. Hierdurch lassen sich die zu speichernden Verkehrsmeldungen deutlich reduzieren, so daß einerseits der Speicherbedarf im Endgerät relativ klein gehalten und andererseits die Sortierzeit vor der Ausgabe verringert werden kann.

Obwohl es möglich ist, daß die Auswahl der zu übertragenden Verkehrsinformation entsprechend dem für das jeweilige Fahrzeug relevanten Gebiet beim Diensteanbieter vorgenommen wird, läßt sich diese Auswahl unmittelbar nach Empfang der Verkehrsinformation mittels einer entsprechenden Filterroutine auch im Kraftfahrzeug durchführen.

Ist ein Fahrer mit seinem Kraftfahrzeug,beispielsweise als Taxifahrer oder Lieferant in erster Linie nur in einem bestimmten Bereich unterwegs, so ist es zweckmäßig, wenn das ausgewählte Gebiet die Position des Kraftfahrzeugs im wesentlichen kreisförmig umgibt. Ist jedoch eine Streckenfahrt zu einem entfernten Ziel, z. B. auf einer Überlandstrecke geplant, so ist es zweckmäßig, wenn das ausgewählte Gebiet in Abhängigkeit von einer geplanten Fahrtroute diese korridorartig umgebend in Bezug auf die jeweils aktuelle Position des Kraftfahrzeugs festlegbar ist.

Um zu verhindern, daß dem Fahrer für ihn nicht relevante Verkehrsmeldungen angesagt oder angezeigt werden, ist nach einer vorteilhaften Weiterbildung der Erfindung vorgesehen, daß jede Verkehrsmeldung zusammen mit einer Aktualitätsinformation übertragen wird, die die voraussichtliche Dauer der allgemeinen Relevanz der jeweiligen Verkehrsmeldung beschreibt, daß die mittlere Fahrzeuggeschwindigkeit festgestellt, mit den den Verkehrsmeldungen zugeordneten Abständen verknüpft und mit der Aktualitätsinformation verglichen wird, um die individuelle Relevanz der jeweiligen Verkehrsmeldung festzustellen, und daß nur solche Verkehrsmeldungen ausgegeben werden, die als für das jeweilige Fahrzeug zeitlich relevant bewertet wurden.

Auf diese Weise läßt sich beispielsweise verhindern, daß dem Fahrer eines Fahrzeugs z.B. eine Staumeldung angesagt wird, die einen Streckenabschnitt seiner geplanten Route betrifft, die aber voraussichtlicht, wenn er diesen Streckenabschnitt erreicht, längst veraltet ist. Kann also beispielsweise damit gerechnet werden, daß ein etwa 200 km entfernter Stau auf der geplanten Strecke sich in etwa einer Stunde aufgelöst haben wird, so braucht dem Fahrer eines Fahrzeugs, das durchschnittlich mit 100 km/h fährt, dieser Stau nicht angesagt werden, da das Fahrzeug diesen Streckenabschnitt erst in zwei Stunden erreichen wird, also erst dann, wenn die Verkehrsmeldung nicht mehr zutrifft.

Hierbei ist es besonders zweckmäßig, wenn die Aktualitätsinformation der jeweiligen Verkehrsmeldung den Übertragungszeitpunkt, die voraussichtliche Dauer sowie den Erfassungszeitpunkt des gemeldeten Ereignisses enthält.

Bei einer vorteilhaften Ausgestaltung der Erfindung ist vorgesehen, daß zunächst die Fahrtrichtung des Kraftfahrzeugs festgestellt wird, daß die Richtung vom Kraftfahrzeug zur jeweiligen Postion der Verkehrsmeldung erfaßt und mit der Fahrtrichtung verglichen wird, und daß die Verkehrsmeldungen nach Richtungen sortiert ausgegeben werden. Auf diese Weise läßt sich erreichen, daß zwei oder mehr Verkehrmeldungen, die von der aktuellen Kraftfahrzeugposition gleichweit enfernt liegende Verkehrsereignisse betreffen nochmals nach ihrer augenblicklichen, richtungsabhängigen Relevanz für den Fahrer sortiert ausgegeben werden können. Ein neben einer vermuteten Fahrtroute liegendes Verkehrsereignis wird hierbei erst nach der Ansage oder Anzeige des direkt vor dem Fahrzeug liegenden Verkehrsereignisses ausgegeben.

Dabei kann anhand der Richtung, in der die Position der Verkehrsmeldung, also der Ort des zu meldenden Verkehrsereignisses von der momentanen Fahrzeugposition aus gesehen liegt, auch festgestellt werden, ob die Verkehrsmeldung die jeweilige Straße in Fahrtrichtung oder die Fahrbahn(en) der Gegenrichtung betrifft, um die Ansage oder Anzeige von die Gegenrichtung betreffenden Verkehrsmeldungen zu vermeiden.

Eine vorteilhafte Weiterbildung der Erfindung zeichnet sich dadurch aus, daß aus der Richtung vom Kraftfahrzeug zur jeweiligen Postion der Verkehrsmeldung und der Fahrtrichtung ein Richtungsfaktor für jede Verkehrsmeldung gebildet wird, der mit dem der jeweiligen Verkehrsmeldung zugeordneten Abstand zu einem örtlichen Relevanzfaktor zusammengefaßt wird, der bei der Ausgabe der Verkehrsmeldungen berücksichtigt wird, wobei vorzugsweise eine Verkehrsmeldung nur dann ausgegeben wird, wenn ihr örtlicher Relevanzfaktor größer als ein vorgebbarer Schwellenwert ist.

Eine andere vorteilhafte Ausgestaltung der Erfindung ist dadurch gekennzeichnet, daß die Postition des Kraftfahrzeugs mit Hilfe eines satellitengestützten Postitionsfeststell-Systems, insbesondere mit dem GPS-System (Global Positioning System) als Geocode festgestellt wird, und daß die Positionen der Verkehrsmeldungen ebenfalls als Geocodes vorliegen, so daß die Feststellung der Abstände ohne weitere Umrechnungen durchgeführt werden kann. Durch die Verwendung von Geocodes lassen sich sowohl die Abstände zwischen Fahrzeug und von den Verkehrsmeldungen betroffenen Streckenabschnitten, die Fahrtrichtung und die Richtungen vom Fahrzeug zu den Streckenabständen besonders einfach ermitteln.

Die Erfindung wird im folgenden beispielsweise anhand der Zeichnung näher erläutert. In dieser zeigt:
Figur 1 ein vereinfachtes schematisches Schaltbild einer Benutzereinheit zur Verwendung als Endgerät in einem Verkehrsinformationssystem,
Figur 2 ein Flußdiagramm einer mit der erfindungsgemäßen Vorrichtung benutzten Filterroutine,
Figur 3 ein Flußdiagramm eines ersten mit der erfindungsgemäßen Vorrichtung benutzten Verfahrens, und
Figur 4 ein Flußdiagramm eines anderen mit der erfindungsgemäßen Vorrichtung benutzten Verfahrens.

In den verschiedenen Figuren der Zeichnung sind einander entsprechende Bauteile und Verfahrensschritte mit dem gleichen Bezugszeichen versehen.

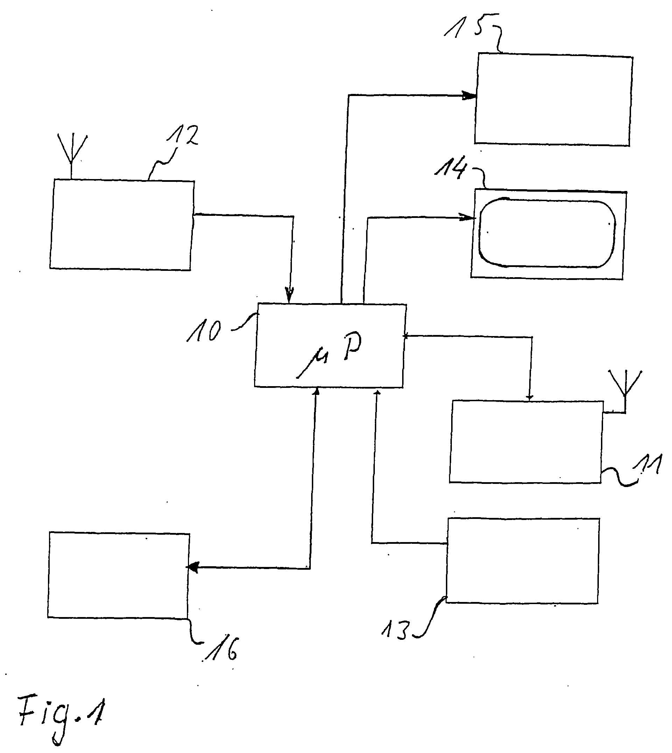

Wie Figur 1 zeigt, weist eine als Endgerät in einem Verkehrs-Informationsdienstsystem einsetzbare Benutzereinheit eine beispielsweise als Mikroprozessor µP ausgebildete zentrale Rechen- und Steuereinheit 10 auf, an die als Telekommunikationseinheit ein Mobiltelefon 11 zur Kommunikation mit einer Zentrale eines Straßen- oder Verkehrs-Informationsdienstsystems und beispielsweise ein GPS-Modul 12 als Ortungsmodul eines satellitengestützten Positionsfeststellsystems angeschlossen sind. Zur Bedienung der Benutzereinheit ist eine Eingabeeinheit 13 vorgesehen, die beispielsweise eine Spracheingabeeinheit, eine vollständige alphanumerische Tastatur, ein Tastenblock, wie er auch bei Telefonen, inbesondere bei Mobiltelefonen verwendet wird, oder im einfachsten Fall ein Dreh-Drück-Steller sein kann. Es ist auch möglich, anstelle einer gesonderten Eingabeeinheit 13 die Tastatur des Mobiltelefons 11 oder eine im Mobiltelefon 11 vorgesehene Spracheingabeeinheit zu verwenden.

Zur Anzeige von Systemrückmeldungen während der Bedienung der Benutzereinheit und insbesondere während der Vorbereitung der Kommunikation mit der Zentrale des Informationsdienstsystems sowie zur Anzeige der vom Informationsdienstsystem zur Benutzereinheit übertragenen und dort gespeicherten Information ist zweckmäßigerweise eine Anzeigeeinheit 14 und/oder eine Sprachausgabeeinheit 15 mit der zentralen Rechen- und Steuereinheit 10 verbunden. Die Anzeigeeinheit 14 kann dabei beispielsweise ein als Flüssigkristallanzeige ausgebildeter Bildschirm sein.

Eine Speichereinheit 16 dient zum temporären oder dauernden Speichern von Verkehrsinformation und anderen Daten.

Das erfindungsgemäße Verfahren wird im folgenden mit Bezug auf die in der Zeichnung dargestellten Flußdiagramme beispielsweise näher erläutert. Beim Betrieb der Benutzereinheit wird dem Benutzer, also insbesondere dem Fahrer eines Kraftfahrzeugs neben einer Vielzahl von nicht näher dargestellten weiteren Betriebsfunktionen über einen Menüpunkt "Verkehrsinformation" die Möglichkeit gegeben, aktuelle Straßenverkehrsinformationen anzufordern und sich je nach den Möglichkeiten des Endgeräts anzeigen und/oder ansagen zu lassen.

Je nach Ausgestaltung des Verkehrs-Informationsdienstsystems ist es möglich, daß der Benutzer mit Hilfe der Benutzereinheit in einem geeigneten Dialog eine Verkehrsinformationsanforderung zusammen mit der augenblicklichen Kraftfahrzeugpostition, die vom GPS-Modul 12 ermittelt wurde, zum Diensteanbieter, also zur Zentrale des Information-Dienstsystems sendet. Anbieterseitig können jetzt die Verkehrsmeldungen, die zusammen mit der jeweiligen Postition des Streckenabschnitts oder -punkts, also zusammen mit dem Ort an dem sich ein zu meldendes Verkehrsereig-nis befindet gespeichert sind, abstandsabhängig sortiert werden, in dem zunächst die Positionen der Verkehrsmeldungen mit der jeweiligen Kraftfahrzeugposition verglichen werden, um daraus die Abstände zu ermitteln. Sobald der Sortiervorgang abgeschlossen ist, kann dann vom Diensteanbieter die Verkehrsinformation mit den nach Abständen sortierten Verkehrsmeldungen zur Benutzereinheit übertragen und dort in geeigneter Weise ausgegeben werden.

Bevorzugt ist es jedoch, daß auf eine Verkehrsinformationsanforderung eines Benutzers hin von der Zentrale des Informationdienstsystem nur die Verkehrsmeldungen zusammen mit der jeweiligen Position des Streckenabschnittes, auf den sie sich beziehen, übertragen werden.

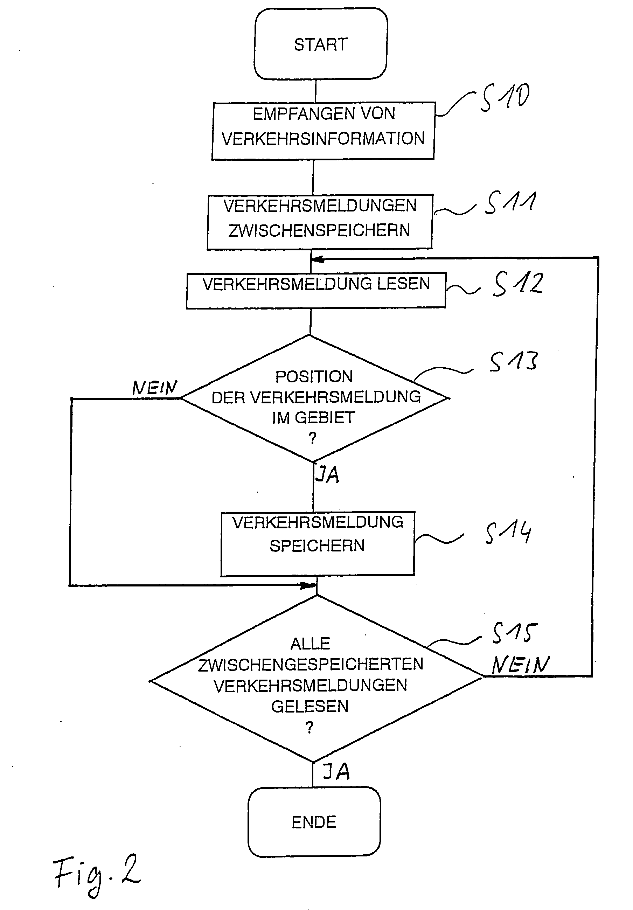

Um dabei die Anzahl der zu speichernden und später auszugebenden Verkehrsmeldungen möglichst gering zu halten , werden mit Hilfe einer in Figur 2 gezeigten Filterroutine nach dem Empfangen von Verkehrsinformation im Schritt S 10 und den Zwischenspeichern der Verkehrsmeldungen im Schritt S11 zunächst die Verkehrsmeldungen im Schritt S12 einzeln gelesen, um im Schritt S13 zu ermitteln, ob die Position der Verkehrsmeldung, also die Position des Streckenabschnitts, auf dem sich die Verkehrsmeldung bezieht, in einem vorher vom Benutzer festlegbaren Gebiet liegt oder nicht. Liegt der betroffene Streckenabschnitt nicht in dem vorbestimmten Gebiet, so kehrt die Routine zum Schritt S12 zurück, um die nächste Verkehrsmeldung zu lesen, nach dem in Schritt S 15 überprüft wurde, ob bereits alle zwischengespeicherten Verkehrsmeldungen gelesen wurden.

Liegt jedoch die im Schritt S12 gelesene Verkehrsmeldung im Gebiet, so wird die Verkehrsmeldung im Schritt S14 gespeichert. Im Schritt S15 wird dann überprüft, ob alle Verkehrsmeldungen gelesen wurden. Ist dies der Fall, so wird die Filterroutine beendet. Andernfalls fährt die Routine so lange mit dem Lesen von Verkehrsmeldungen in Schritt S12 fort, bis alle Verkehrsmeldungen gelesen sind.

Das Gebiet, das zur Auswahl der für den Benutzer interessanten Verkehrsmeldungen ausgewählt wird, ist entweder ein im wesentlichen kreisförmiges Gebiet, dessen Radius vom System zweckmäßig vorgegeben wird, falls der Bentuzer nicht einen entsprechenden Wert dafür eingibt. Für zielgerichtete Fahrten, insbesondere für Überlandfahrten ist es zweckmäßig, wenn ein schlüssellochartiges Gebiet festgelegt wird, das einen im wesentlichen kreisförmigen Abschnitt mit relativ kleinem Radius um die augenblickliche Fahrzeugposition herum und einen in Richtung des Fahrtziels auf beiden Seiten der vermutlichen Fahrtroute liegenden kegelförmigen Bereich umfaßt.

Steht dem Benutzer in seiner Benutzereinheit auch ein Navigationssystem zur Verfügung und liegt eine Routenplanung zum gewünschten Fahrtziel vor, so kann das interessierende Gebiet auch korridorartig entlang der Route ausgewählt werden, wobei die Breite des Korridors entweder vom Fahrer frei gewählt oder vom System in zweckmäßiger Weise festgelegt werden kann.

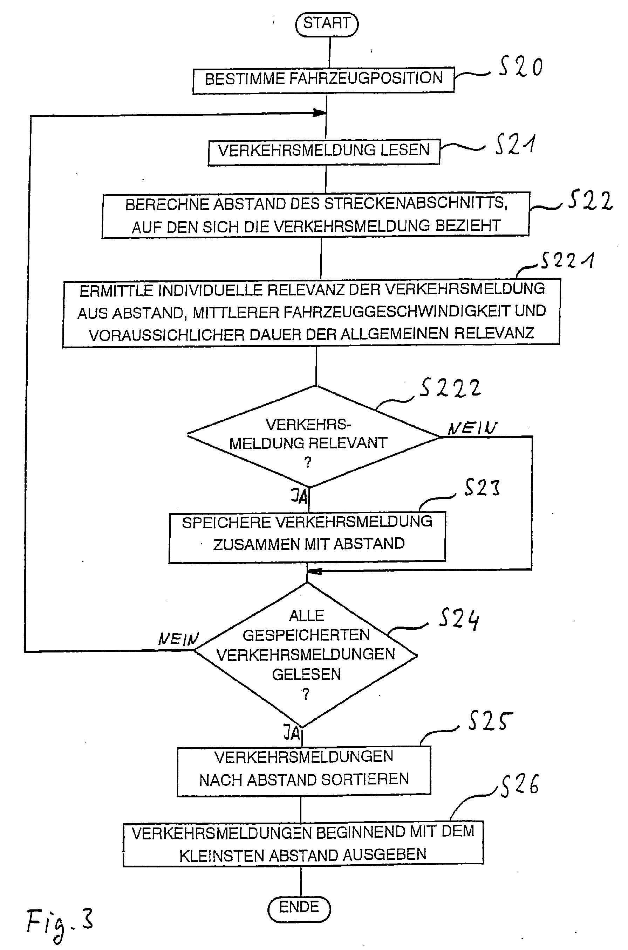

Sobald mit Hilfe der Filterroutine alle das ausgewählte Gebiet betreffenden Verkehrsmeldungen gespeichert sind, erfolgt die Ausgabe der einzelnen Verkehrsmeldungen entsprechend der in Figur 3 dargestellten Ausgaberoutine.

Vor der Ansage oder Anzeige der Verkehrsmeldugen wird dazu im Schritt S20 zunächst die aktuelle Fahrzeugposition bestimmt. Sobald daraufhin eine Verkehrsmeldung im Schritt S21 gelesen wurde, wird nachfolgend im Schritt S22 der Abstand der Fahrzeugposition von der Position des von der Verkehrsmeldung betrofffenen Streckenabschnitts berechnet. Anschließend wird im einfachsten Fall im Schritt S23 die Verkehrsmeldung zusammen mit dem berechneten Abstand gespeichert. Dann wird im Schritt S24 überprüft, ob alle gespreicherten Verkehrsmeldungen gelesen wurden, und die Routine bei Schritt S21 so lange fortgesetzt, bis der Abstand zum Streckenabschnitt für jede Verkehrsmeldung berechnet wurde. Nach dem Sortieren der Verkehrsmeldungen in Abhängigkeit der ihnen zugeordneten Abstände im Schritt S25 werden dann im Schritt S26 die Verkehrsmeldungen beginnend mit dem kleinsten Abstand ausgegeben.

Um dabei den Fahrer die einzelnen Verkehrsereignisse, wie beispielsweise Staus und Behinderungen, und Streckeninformationen, wie Straßensperrungen, Umleitungen und witterungsbedingte Straßenzustände, nicht nur in der Reihenfolge anzusagen oder anzuzeigen, in der der Benutzer mit ihnen konfroniert wird, sondern dem Benutzer nur die für ihn tatsächlich relevanten Verkehrsmeldungen zu präsentieren, kann bei der in Figur 3 dargestellten Routine nach der Abstandsberechnung in Schritt S22, in Schritt S221 die individuelle Relevanz der Verkehrsmeldung bestimmt werden.

Hierzu wird beispielsweise aus dem im Schritt S22 ermittelten Abstand und einer mittleren Fahrzeuggeschwindigkeit berechnet, wann der Benutzer mit seinem Fahrzeug den von der Verkehrsmeldung betroffenen Streckenabschnitt erreichen wird. Dieser Zeitpunkt wird mit einer Aktualitätsinformation verglichen, die jeder Verkehrsmeldung beigefügt ist, und aus der das voraussichtliche Ende der zu meldenden Verkehrsbeeinträchtigung ermittelt werden kann.

Dieses voraussichtliche Ende der Verkehrsbeeinträchtigung kann beispielsweise bei Straßensperrungen oder -behinderung in Folge von Bauarbeiten relativ genau angegeben werden. Bei Behinderungen durch Verkehrsunfälle läßt sich das Ende oft auch unter Berücksichtigung des Unfallzeitpunkts und der Schwere des Unfalls abschätzen.

Durch einen Vergleich des Zeitpunkts, zu dem der Benutzer mit seinem Fahrzeug den entsprechenden Streckenabschnitt voraussichtlich erreicht, mit dem Endzeitpunkt der Behinderung läßt sich die individuelle Relevanz der Verkehrsmeldung für den jeweiligen Benutzer bestimmen. Im Schritt S222 wird dann anhand der ermittelten individuellen Relevanz überpüft, ob die jeweilige Verkehrsmeldung relevant ist und im Schritt S23 zusammen mit dem Abstand gespeichert werden soll oder nicht. Im letzteren Fall kehrt die Routine zum Schritt S21 zurück, um die nächste Verkehrsmeldung zu lesen, nachdem in Schritt S24 überprüft wurde, ob bereits alle zwischengespeicherten Verkehrsmeldungen gelesen wurden.

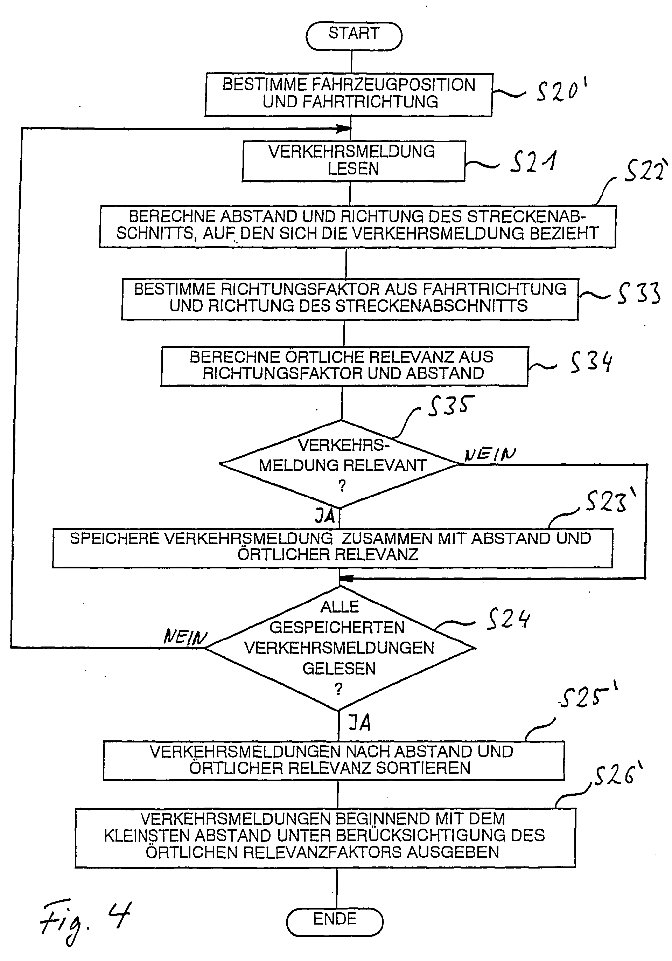

Bei einem anderen Ausführungsbeispiel des erfindungsgemäßen Verfahrens zum Ausgeben von Verkehrsinformation wird zunächst, wie in Figur 4 gezeigt, im Schritt S20' nicht nur die Fahrzeugposition sondern auch die Fahrtrichtung ermittelt, in dem beispielsweise aus zwei oder mehr aufeinander folgenden Fahrzeugpositionen ein Fahrtrichtungsvektor, im folgenden kurz als Fahrtrichtung bezeichnet, berechnet wird. Anschließend wird im Schritt S21 jeweils eine Verkehrsmeldung gelesen, um im Schritt S22' nicht nur den Abstand des Streckenabschnitts von der aktuellen Fahrzeugposition sondern auch die Richtung zu diesem Streckenabschnitt zu ermitteln. Im Schritt S33 wird dann ein Richtungsfaktor aus der Fahrtrichtung und der Richtung des Streckenabschnitts bestimmt, um aus dem Abstand und dem Richtungsfaktor jeder Verkehrsmeldung im Schritt S34 eine örtliche Relevanz zu berechnen. Dabei wird zweckmäßigerweise auch berücksichtigt, ob das der Verkehrsmeldung zu Grunde liegende Verkehrsereignis für die aktuelle Fahrtrichtung oder für die Gegenfahrtrichtung von Bedeutung ist.

Liegt beispielsweise ein Verkehrsereignis auf einem Streckenabschnitt vor, der in Fahrtrichtung liegt, so ist der Winkel zwischen Fahrtrichtung und Richtung des Streckenabschnitts 0 ° und die Verkehrsmeldung erhält die örtliche Relevanz 1, sofern sie nicht die Gegenrichtung betrifft. Liegt ein Verkehrsereignis auf einem seitlich der Fahrtrichtung liegenden Streckenabschnitt, so ist der Winkel zwischen Fahrtrichtung und Richtung des Streckenabschnitts von 0 verschieden und die örtliche Relevanz wird aus Richtungsfaktor und Abstand berechnet. Ist der Winkel relativ klein, beispielsweise 5 ° oder 10 °, so wird der Verkehrsmeldung eine relativ hohe Relevanz, die jedoch kleiner als 1 ist zugewiesen. Dabei erhält bei gleichem Richtungsfaktor z. B. das weiter entfernt liegende Verkehrsereignis die höhere Relevanz, da mit zunehmendem Abstand zwischen der Position der Verkehrsmeldung und der momentanen Fahrzeugposition die Wahrscheinlichkeit einer Abweichung von der augenblicklichen Fahrtrichtung zunimmt. Liegt der Streckenabschnitt nahezu im rechten Winkel zur Fahrtrichtung oder sogar hinter der aktuellen Fahrzeugposition, so wird bei zielgerichteter Fahrt die entsprechende Verkehrsmeldung als nicht relevant bezeichnet.

Die örtliche Relevanz, die beispielsweise als Wert zwischen 0 und 1 oder auch in binärer Darstellung ein ganzahliger Wert zwischen 0 und 3 oder 0 und 7 sein kann, je nach Anzahl der verwendeten Bit, wird dann der Verkehrsmeldung zugeordnet, so daß im Schritt S35 überprüft werden kann, ob die Verkehrsmeldung relevant ist, also ob die örtliche Relevanz einen vorgegebenen Schwellwert übersteigt oder nicht. Wird die Verkehrsmeldung als relevant erachtet, so wird sie nachfolgend im Schritt S23' zusammen mit dem Abstand und der örtlichen Relevanz gespeichert. Der Schwellenwert für die örtliche Relevanz kann entweder vom Benutzer selbst oder in zweckmäßiger Weise vom System festgelegt werden. Ist der Benutzer beispielsweise in einer Stadt unterwegs, wo er häufig die Fahrtrichtung wechselt, so kann der Schwellenwert für die örtliche Relevanz beispielsweise auf 0 gesetzt werden, um alle Verkehrsmeldungen unabhängig von der Richtung, aber nach Abstand und vorzugsweise auch nach örtlicher Relevanz sortiert auszugeben. Befindet sich der Benutzer mit seinem Fahrzeug auf einer zielgerichteten Fahrt, so kann er einen relativ hohen Schwellenwert eingeben, so daß neben seiner beabsichtigten Fahrtroute liegende Verkehrsereignisse scheuklappenartig unterdrückt werden.

Wird im Schritt S35 eine Verkehrsmeldung als nicht relevant erachtet, so kehrt die Routine unmittelbar zum Schritt S21 zurück, um die nächste Verkehrsmeldung zu lesen, nach dem in Schritt S24 überprüft wurde, ob bereits alle zwischengespeicherten Verkehrsmeldungen gelesen wurden.

Im Schritt S24 wird dann überprüft, ob sämtliche Verkehrsmeldungen gelesen wurden, um diese dann anschließend im Schritt S25' nach Abstand zu sortieren. Im Schritt S26' werden dann die Verkehrsmeldungen beginnend mit dem kleinsten Abstand unter Berücksichtigung des örtlichen Relevanzfaktors ausgegeben.

Dabei werden beispielsweise alle Verkehrsmeldungen eines Entfernungsbereichs entsprechend ihrer Relevanz angesagt oder angezeigt. Es ist jedoch auch möglich, daß zunächst nur die Verkehrsmeldungen mit jeweils höchster Relevanz nach Abständen sortiert ausgegeben werden, um dann die Verkehrsmeldungen geringerer Relevanz ebenfalls nach Abstand sortiert anzuzeigen oder anzusagen.

Darüber hinaus ist es schließlich möglich, daß zusätzlich zu der Ermittlung der örtlichen Relevanz in den Schritten S33, S34 und S35 auch noch die zeitliche Relevanz, wie sie in den Schritten S221 und S222 ermittelt und überprüft wurde, vor oder nach der Feststelleung der örtlichen Relevanz zu berücksichtigen, um dem Benutzer des Verkehrs-Informationdienstsystems wirklich nur die für ihn wichtigen Verkehrsmeldungen zu präsentieren, um ihn dadurch in seiner Fahrtroutenwahl optimal zu unterstützen, ohne ihn unnötig vom Verkehrsgeschehen abzulenken, wie dies beispielsweise durch die Verkehrsdurchsagen von Rundfunksendern geschieht.

## Patentansprüche

1. Vorrichtung zum Ausgeben von Verkehrsinformation in einem Kraftfahrzeug, mit:
- einer Speichereinheit (16) zum Speichern von zum Kraftfahrzeug übertragenen Verkehrsmeldungen zusammen mit der jeweiligen Position des Streckenabschnitts oder -punkts, auf den sie sich beziehen,
- einer zentralen Rechen- und Steuereinheit (10), die die Positionen der Verkehrsmeldungen mit der jeweiligen Position des Kraftfahrzeugs vergleicht, in dem die Verkehrsinformation ausgegeben werden soll, um die Abstände der jeweiligen Positionen der Verkehrsmeldungen von der Position dieses Kraftfahrzeugs festzustellen, und
- einer Anzeige- und/oder Sprachausgabeeinheit (14 bzw. 15) zum Ausgeben der Verkehrsmeldungen,
**dadurch gekennzeichnet, dass** die zentrale Rechen- und Steuereinheit (10) Mittel zum Sortieren der Verkehrsmeldungen nach Abständen umfaßt, um die Verkehrsmeldungen sortiert, beginnend mit dem kleinsten Abstand auszugeben.

2. Vorrichtung nach Anspruch 1, **dadurch gekennzeichnet, daß** Aktualisierungsmittel vorgesehen sind, die die zu einem Kraftfahrzeug übertragenen Verkehrsmeldungen in vorgebbaren Zeitabständen laufenden aktualisieren.

3. Vorrichtung nach Anspruch 1 oder 2, **dadurch gekennzeichnet, daß** eine Filterroutine vorgesehen ist, um im Kraftfahrzeug nur Verkehrsmeldungen zu speichern und anschließend auszugeben, die ein ausgewähltes Gebiet betreffen.

4. Vorrichtung nach Anspruch 3, **dadurch gekennzeichnet, daß** Mittel zum Festlegen des ausgewählten Gebietes vorgesehen sind, das die Position des Kraftfahrzeugs im wesentlichen kreisförmig umgibt.

5. Vorrichtung nach Anspruch 3, **dadurch gekennzeichnet, daß** Mittel zum Festlegen des ausgewählten Gebietes vorgesehen sind, so daß das ausgewählte Gebiet in Abhängigkeit von einer geplanten Fahrtroute diese korridorartig umgebend in Bezug auf die jeweils aktuelle Position des Kraftfahrzeugs festlegbar ist.

6. Vorrichtung nach einem der vorstehenden Ansprüche, **dadurch gekennzeichnet, dass** Mittel zum Feststellen einer individuelle Relevanz einer Verkehrsmeldung vorgesehen sind, die
-- die mittlere Fahrzeuggeschwindigkeit feststellen und
-- diese mit den den Verkehrsmeldungen zugeordneten Abständen verknüpfen und mit einer Aktualitätsinformation vergleichen, die jeder Verkehrsmeldung zugeordnet ist und die die voraussichtliche Dauer der allgemeinen Relevanz der jeweiligen Verkehrsmeldung beschreibt, um die individuelle Relevanz der jeweiligen Verkehrsmeldung festzustellen, so daß nur solche Verkehrsmeldungen ausgegeben werden, die als für das jeweilige Fahrzeug zeitlich relevant bewertet wurden.

7. Vorrichtung nach Anspruch 6, **dadurch gekennzeichnet, daß** die Aktualitätsinformation der jeweiligen Verkehrsmeldung den Übertragungszeitpunkt, die voraussichtliche Dauer sowie den Erfassungszeitpunkt des gemeldeten Ereignisses enthält.

8. Vorrichtung nach einem der vorstehenden Ansprüche, **dadurch gekennzeichnet, daß**
- Mittel zum Feststellen der Fahrtrichtung des Kraftfahrzeugs,
- Mittel zum Erfassen der Richtung vom Kraftfahrzeug zur jeweiligen Position der Verkehrsmeldung,
- Mittel zum Vergleichen der Richtung vom Kraftfahrzeug zur jeweiligen Position der Verkehrsmeldung mit der Fahrtrichtung, und
- Mittel zum Sortieren der Verkehrsmeldungen nach Richtungen für deren Ausgabe.

9. Vorrichtung nach Anspruch 8, **gekennzeichnet durch**
- Mittel zum Bilden eines Richtungsfaktors für jede Verkehrsmeldung aus der Fahrtrichtung und der Richtung vom Kraftfahrzeug zur jeweiligen Position der Verkehrsmeldung und
- Mittel zum Zusammenfassen des Richtungsfaktors mit dem der jeweiligen Verkehrsmeldung zugeordneten Abstand zu einem örtlichen Relevanzfaktor, der bei der Ausgabe der Verkehrsmeldungen berücksichtigt wird.

10. Vorrichtung nach Anspruch 9, **gekennzeichnet durch** Mittel zum Vergleichen des örtlichen Relevanzfaktors einer Verkehrsmeldung mit einem vorgebbarer Schwellenwert, um eine Verkehrsmeldung nur dann auszugeben, wenn ihr örtlicher Relevanzfaktor größer als der Schwellenwert ist.

11. Vorrichtung nach einem der vorstehenden Ansprüche, **dadurch gekennzeichnet, daß** Mittel zum Feststellen der Position des Kraftfahrzeugs mit Hilfe eines satellitengestützten Positionsfeststell-Systems als Geocode vorgesehen sind und daß die Positionen der Verkehrsmeldungen ebenfalls als Geocodes vorliegen, so daß die Feststellung der Abstände ohne weitere Umrechnungen durchgeführt werden kann.

12. Vorrichtung nach Anspruch 11, **dadurch gekennzeichnet, dass** als Mittel zum Feststellen der Position des Kraftfahrzeugs ein GPS-Modul (12) als Ortungsmodul des satellitengestützten Positionsfeststellsystems vorgesehen ist.

13. Vorrichtung nach einem der vorstehenden Ansprüche, **dadurch gekennzeichnet, daß** als Telekommunikationseinheit ein Mobiltelefon (11) zum Empfang der übertragenen Verkehrsmeldungen vorgesehen ist.

14. Vorrichtung nach einem der vorstehenden Ansprüche, **dadurch gekennzeichnet, dass** zur Bedienung der Vorrichtung eine Eingabeeinheit (13) vorgesehen ist, die eine Spracheingabeeinheit, eine vollständige alphanumerische Tastatur, ein Tastenblock, wie er auch bei Telefonen, inbesondere bei Mobiltelefonen verwendet wird, oder ein Dreh-Drück-Steller sein kann.
